# EUROPÄISCHE PATENTSCHRIFT

(11) **EP 2 409 562 B1**
(45) Veröffentlichungstag und Bekanntmachung des Hinweises auf die Patenterteilung: **28.08.2013**
(21) Anmeldenummer: 11401553.0
(22) Anmeldetag: 18.07.2011
(51) Int. Cl.: A01C 23/00, A01M 7/00

(54) **Landwirtschaftliches Verteilergestänge**
Agricultural distribution boom
Flèche de distribution agricole

(30) Priorität: 23.07.2010 DE 102010036588
(43) Veröffentlichungstag der Anmeldung: 25.01.2012
(73) Patentinhaber: Amazonen-Werke H. Dreyer GmbH & Co. KG, 49205 Hasbergen (DE)
(72) Erfinder: Austermann, Stefan, 48291 Telgte (DE); Kiefer, Stefan, 49074 Osnabrück (DE); Oberheide, Friedrich, 49143 Bissendorf (DE)

(56) Entgegenhaltungen:
- DE-U1-202011 003 270
- US-A- 5 433 380
- US-A- 5 887 390
- US-B1- 6 244 520

## Beschreibung

Die Erfindung betrifft ein landwirtschaftliches Verteilergestänge gemäß des Oberbegriffes des Patentanspruches 1.

Ein derartiges Verteilergestänge für landwirtschaftliche Feldspritzen ist durch den Prospekt "Amazone UX Spezial UX Super" mit Druckvermerk "MI 2449 (D) 10.09" bekannt geworden. Auf Seite 13 unten ist eine Reinigungseinrichtung für außen dargestellt. Diese Reinigungseinrichtung ist als Spritzpistole ausgebildet. Diese Spritzpistole ist über einen Schlauch mit einer an dem Verteilergestänge angeordneten Schlauchtrommel verbunden. Der Bediener muss einen Schutzanzug tragen, um dann in zeitraubender Handarbeit das Gestänge mit der Spritzpistole reinigen zu können.

Ein Sprühausleger mit mehreren Düsen ist auch aus der US 6,244,520 bekannt.

Der Erfindung liegt die Aufgabe zu Grunde, auf einfache Weise es zu ermöglichen, dass zumindest die am stärksten verschmutzten Bereiche eines Verteilergestänges zumindest von der stärksten Verschmutzung gereinigt werden können.

Diese Aufgabe wird erfindungsgemäß dadurch gelöst, dass mehrere Reinigungselemente zumindest teilweise über die Ausdehnung des Gestänges, vorzugsweise in verteilter Weise an zumindest einigen der Teilsegmente des Verteilergestänges angeordnet sind. Infolge dieser Maßnahme werden durch die an dem Verteilergestänge angeordneten Reinigungselemente, denen über Zuleitungen die Reinigungsflüssigkeit, beispielsweise Frischwasser zugeführt wird, zumindest die am stärksten verschmutzten Bereiche des Verteilergestänges ohne Handarbeit zumindest einer Grobreinigung unmittelbar auf dem Feld unterzogen. Dieser Vorgang lässt sich in sehr kurzer Zeit auch automatisiert durchführen.

Eine besonders effektive Reinigung lässt sich dadurch erreichen, dass die Reinigungselemente im Bereich der Ausbringelemente angeordnet sind.

Eine vorteilhafte Anordnung der Reinigungselemente wird dadurch erreicht, dass die Reinigungselemente im unteren Bereich des Verteilergestänges angeordnet sind.

Bei einem Verteilergestänge, das rohrförmige und sich in Längserstreckung des Verteilergestänges quer zur Fahrtrichtung erstreckende Elemente aufweist, ist vorgesehen, dass die Zuleitungen für die Reinigungselemente in und/oder an den rohrförmigen Elementen angeordnet sind, dass die rohrförmigen Elemente Austrittsöffnungen aufweisen, dass die Austrittsöffnungen die Reinigungselemente bilden und/oder die Reinigungselemente den Austrittsöffnungen zugeordnet sind. Infolge dieser Maßnahmen werden die Reinigungselemente an bereits an dem Verteilergestänge sich befindlichen Teilen angeordnet bzw. in diese integriert.

Eine besonders gute Reinigung lässt sich dadurch erreichen, dass den Austrittsöffnungen als Sprühdüsen ausgebildete Reinigungselemente zugeordnet sind.

Eine weitere Verbesserung der Reinigung des Verteilergestänges lässt sich dadurch erreichen, dass aus den Reinigungselementen zumindest ein rotierender und/oder hin- und hergehender Sprühstrahl und/oder Sprühfächer austritt.

Eine Reinigung des Verteilergestänges, wenn es bereits zusammen geklappt ist, ist in einfacher Weise dadurch möglich, dass die Reinigungselemente an dem jeweils innersten Teilsegment angeordnet sind.

Hierbei ist vorteilhaft, dass die Reinigungselemente in Längsrichtung des innersten Teilsegmentes mittels eines Führungselementes bewegbar angeordnet sind. Infolge dieser Maßnahmen kann mit einer sehr kleinen Reinigungsvorrichtung, die hin- und herfahrbar an dem Verteilergestänge angeordnet ist, das gesamte Verteilergestänge gereinigt werden.

Eine kompakte Ausgestaltung der Reinigungsvorrichtung lässt sich dadurch erreichen, dass die Reinigungselemente derart angeordnet sind, dass die aus dem Austrittsöffnungen der Reinigungselemente austretende Reinigungsflüssigkeit bei in Transportstellung zusammen geklappten Teilsegmenten des Verteilergestänges zumindest die am stärksten verschmutzten Bereiche des Verteilergestänges von der austretenden Reinigungsflüssigkeiten zum Reinigen des Verteilergestänges erreicht werden.

Weitere Einzelheiten der Erfindung sind der Beispielsbeschreibung und den Zeichnungen zu entnehmen. Hierbei zeigen
- Fig. 1: die linke Hälfte des Verteilergestänges der landwirtschaftlichen Feldspritze in der Ansicht von hinten mit einer über die gesamte Breite des Verteilergestänges angeordneten Reinigungseinrichtung,
- Fig. 2: ein Teilsegment des Verteilergestänges gemäß Fig. 1 im vergrößertem Maßstab und in der Ansicht von hinten,
- Fig. 3: das Teilsegment gemäß Fig. 2 in der Ansicht III-III,
- Fig. 4: das Verteilergestänge in zusammengeklappter Position in perspektivischer Darstellung mit einer anders ausgestalteten Reinigungseinrichtung,
- Fig. 5: das Verteilergestänge gemäß Fig. 4 in der Ansicht V - V,
- Fig. 6: das Verteilergestänge mit einer weiteren Reinigungseinrichtung in der Ansicht gemäß Fig. 5 und
- Fig. 7: das Verteilergestänge mit einer weiteren Reinigungseinrichtung in der Ansicht gemäß Fig. 5.

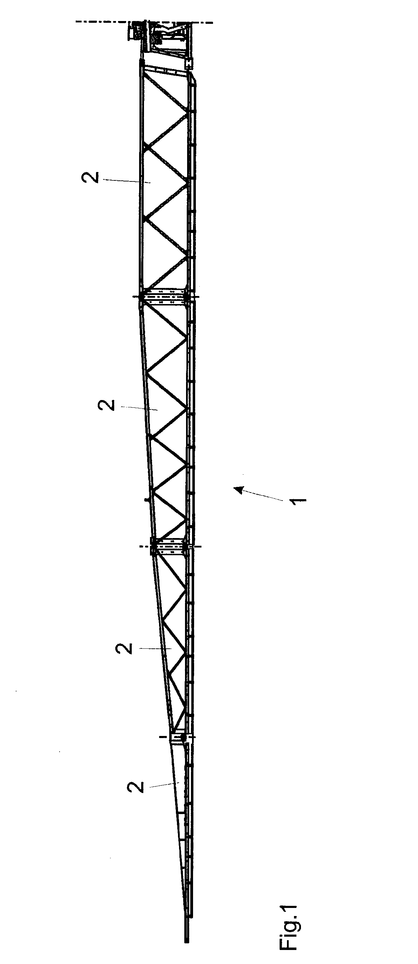

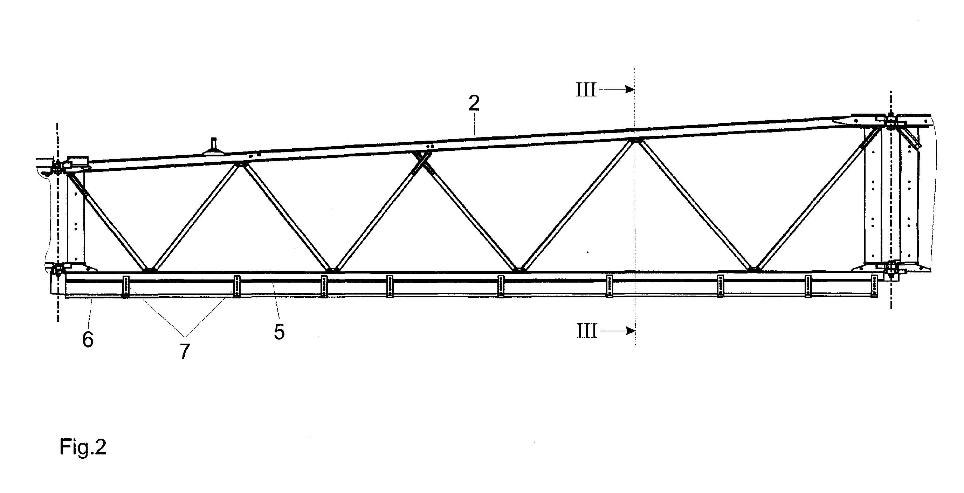

Die nicht dargestellte Feldspritze weist einen Rahmen, Vorratsbehälter, Dosiereinrichtung und ein Verteilergestänge auf. Das Verteilergestänge 1, von dem in Fig. 1 nur die in Fahrtrichtung linke Hälfte dargestellt ist, weist mehrere zueinander ein- und ausfaltbare Teilsegmente 2 auf. In Fig. 2 ist ein Teilsegment 2 dargestellt. An den Segmenten 2 des Verteilergestänges 1 sind beabstandet zueinander mehrere Verteilerdüsen 3 angeordnet. Diesen Verteilerdüsen 3 werden über die Leitungen 4 über die nicht dargestellte Dosiereinrichtung die sich im Vorratsbehälter befindlichen auszubringenden Flüssigkeiten zugeführt. Diese Flüssigkeiten werden von den Verteilerdüsen 3 in Form von sich einander überlappenden Spritzfächern ausgebracht.

Ein in den unteren Bereichen 5 der Teilsegmente 2 sind die die Spritzdüsen 3 nach unten überragenden Schutzrohre 6 mittels Halterungen 7 angeordnet.

Besonders der untere Bereich 5 des Verteilergestänges 5 im Umfeld der Spritzdüsen 3 wird während des Ausbringens der Flüssigkeit durch die ausgebrachten Spritzflüssigkeit verschmutzt.

Um nach dem Beenden des Ausbringens der Spritzflüssigkeit zumindest die am meisten verschmutzten Bereiche des Verteilergestänges 1 zu reinigen ist an den unteren Bereichen 5 der Teilsegmente 2 eine Reinigungsvorrichtung 8 angeordnet.

Die Reinigungsvorrichtung 8 weist Reinigungselemente 9 auf. Diese Reinigungselemente 9 sind als Austrittsöffnungen in den von den Schutzrohren 6 gebildeten rohrförmigen Elementen angeordnet. Die Austrittsöffnungen 9 sind beabstandet zueinander über zu mindest annähernd die gesamte Längenausdehnung der Schutzrohre 6 und/oder der Teilsegmente 2 angeordnet. Somit sind mehrere Reinigungselemente 9 über die gesamte Ausdehnung des Verteilergestänges 1 in verteilter Weise an den Teilsegmenten 2 des Verteilergestänges 1 angeordnet.

Die Zuleitungen für die Reinigungsflüssigkeit für die Reinigungselemente 9 sind in nicht dargestellter Weise an den rohrförmigen Schutzrohren 6 angeschlossen.
Erforderlichenfalls können den Austrittsöffnungen 9 auch nicht dargestellte Sprühdüsen zugeordnet werden, aus denen dann die Reinigungsflüssigkeit entsprechend austritt.

Durch die Anordnung der Austrittsöffnungen 9 der Reinigungsvorrichtung 8 sind die Reinigungselemente im unteren Bereich des Verteilergestänges 1 angeordnet. Weiterhin sind sie im Bereich der von den Spritzdüsen 3 gebildeten Ausbringelemente angeordnet.

Wenn die Ausbringarbeit und das Ausbringen der Spritzflüssigkeit beendet bzw. unterbrochen wird um eine Transportfahrt außerhalb des Feldes durchzuführen, wird den Reinigungselementen 9 Reinigungsflüssigkeit, beispielsweise Frischwasser über geeignete Zuführorgane zugeleitet. Durch die Zuleitung von Reinigungsflüssigkeit treten aus den Austrittsöffnungen 9 Sprühstrahlen 10 aus. Durch diese Sprühstrahlen 10 der Reinigungsflüssigkeit wird das Verteilergestänge 1 zumindest in seinem unteren Bereich 5, in dem die Spritzdüsen 3 angeordnet sind, zumindest von den größeren Verunreinigungen gesäubert.

Erforderlichenfalls können den Austrittsöffnungen 9, wie bereits erwähnt Sprüh- oder Reinigungsdüsen zugeordnet werden. Diese Reinigungsdüsen können dann so ausgebildet sein, dass aus den Reinigungselementen 9 ein rotierender und/oder hin- und hergehender Sprühstrahl und/oder Sprühfächer austritt.

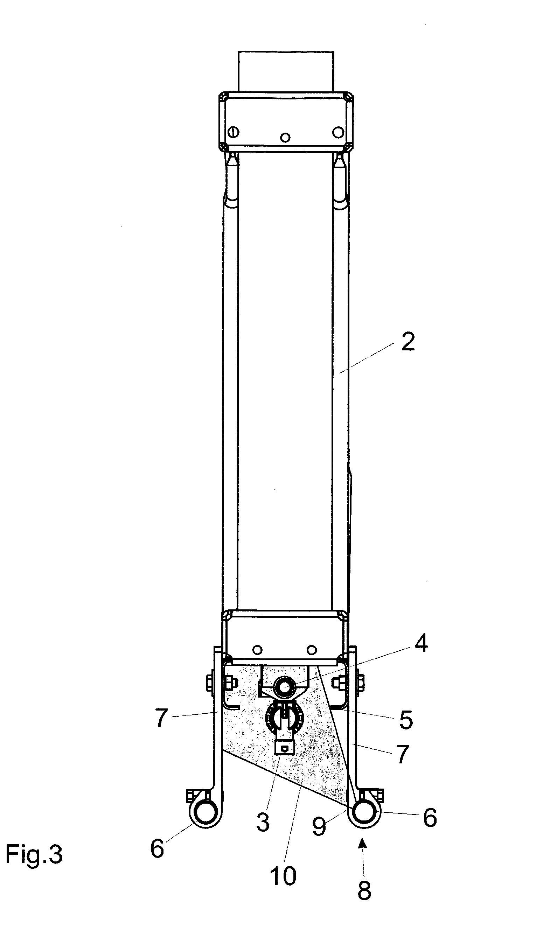

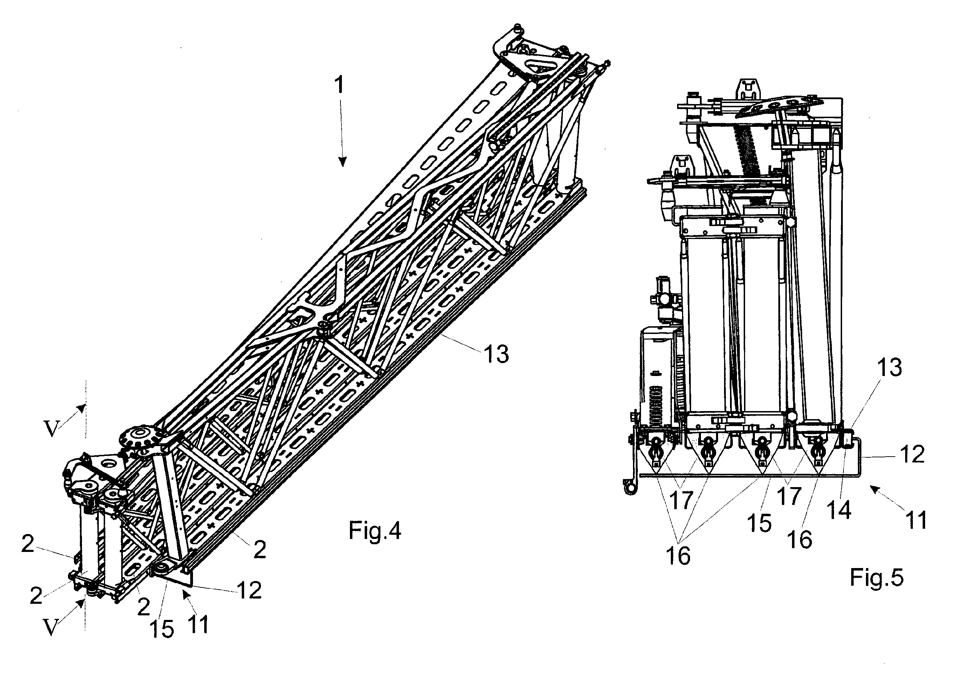

Die Reinigungsvorrichtung 11 für das Verteilergestänge 1 gemäß den Fig. 4 und 5 unterscheidet sich von der Reinigungsvorrichtung gemäß den Fig. 1 bis 3 dadurch, dass die Reinigungsvorrichtung 11 nicht an sämtlichen Teilsegmenten 2, sondern nur an dem innersten Teilsegment 2 angeordnet ist. Um dennoch die unteren Bereiche 5 sämtlicher Teilsegmente 2 reinigen zu können, wird das Verteilergestänge 1 zusammengeklappt, wie die Fig. 4 und 5 zeigen. Damit nun sämtliche unteren verschmutzten Bereiche 5 aller Teilsegmente 2 erreicht werden können, sind die Reinigungselemente 12 der Reinigungsvorrichtung 11 in Längsrichtung des innersten Teilsegmentes 2 mittels eines Führungselementes 13 bewegbar angeordnet. Somit können die Reinigungselemente 12 in Längsrichtung der Teilsegmente 2 entlanggefahren werden. Wie der Fig. 5 zu entnehmen ist, weist die Reinigungsvorrichtung 11 einen in einem Führungselement 13 verschiebbar mit einem Führungsschlitten 14 angeordneten Reinigungsschlitten 15 auf, an dem für jedes Teilsegment 2 eine Austrittsöffnung 16, aus welchen zur Reinigung Sprühfächer 17 austreten, angeordnet ist.

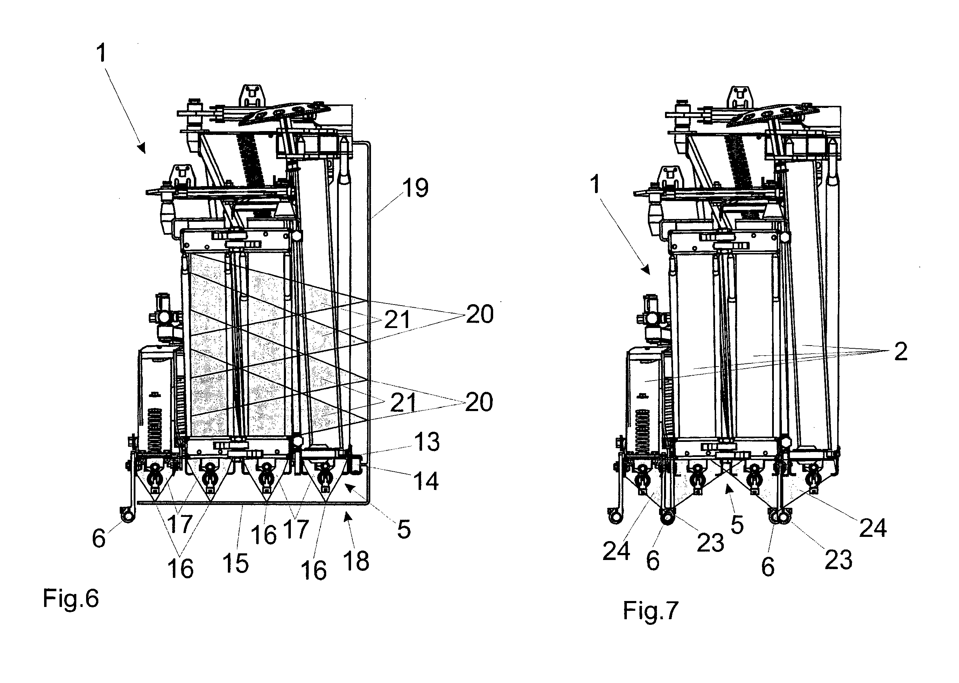

Die Reinigungsvorrichtung 18 für das Verteilergestänge 1 gemäß Fig. 6 unterscheidet sich von der Reinigungsvorrichtung 11 gemäß Fig. 4 und 5 dadurch, dass die Reinigungsvorrichtung 18 sich zusätzlich über die untere Hälfte 2 der Teilsegmente 2 nach oben erstreckt. Hierbei sind auch in dem sich nach oben erstreckenden Teil 19 der Reinigungsvorrichtung 18 Austrittsöffnungen 16 für die Reinigungsflüssigkeit angeordnet. Aus diesen Austrittsöffnungen 20 treten die Reinigungsflüssigkeit in Sprühfächern 21 aus, so dass die Teilsegmente 2 oberhalb der Spritzdüsen 5 zusätzlich zumindest von den stärksten Verschmutzungen gereinigt werden können.

Die Reinigungsvorrichtung 22 für das Verteilergestänge 1 gemäß Fig. 7 unterscheidet sich von der Reinigungsvorrichtung gemäß Fig. 1 bis 3 dadurch, dass die Reinigungsvorrichtung 22 nur einigen der Teilsegmente 2 zugeordnet ist. Um dennoch die unteren Bereiche 5 sämtlicher Teilsegmente 2 reinigen zu können, wird das Verteilergestänge 1 zusammengeklappt, wie die Fig. 7 zeigt. Damit nun sämtliche unteren verschmutzten Bereiche 5 aller Teilsegmente 2 erreicht werden können, sind als die Reinigungselemente ausgebildeten Austrittsöffnungen 23 derart ausgebildet, dass die aus den Austrittsöffnungen 23 der rohrförmigen Schutzrohre 6 in Sprühfächern 24 austretenden Reinigungsflüssigkeit bei in Transportstellung zusammengeklappten Teilsegmenten 2 des Verteilergestänges 1 durch größere sich spreizende Sprühfächer zumindest annähernd sämtliche unteren am stärksten verschmutzten Bereiche der Teilsegmente 2 des Verteilergestänges 1 erreichen und somit zumindest von der stärksten Verschmutzung reinigen. Somit werden durch die austretende Reinigungsflüssigkeit zum Reinigen des Verteilergestänges 1 zumindest sämtliche am stärksten verschmutzten Bereiche vor den Sprühfächern 24 erreicht.

## Patentansprüche

1. Landwirtschaftliches Verteilergestänge bestehend aus mehreren zueinander ein- und ausklappbaren Teilsegmenten, denen Spritzmittel führende Ausbringleitungen mit Ausbringelementen zugeordnet sind, und mit einer zumindest ein Reinigungselement aufweisenden Reinigungsvorrichtung zum Reinigen des Verteilergestänges oder Teilen davon, **dadurch gekennzeichnet, dass** mehrere Reinigungselemente (9, 16, 20, 23) zumindest teilweise über die Ausdehnung des Gestänges (1), vorzugsweise in verteilter Weise an zumindest einigen der Teilsegmente (2) des Verteilergestänges (1) angeordnet sind und den Reinigungselementen (9, 16, 20, 23) über Zuleitungen eine Reinigungsflüssigkeit zuführbar ist.

2. Verteilergestänge nach Anspruch 1, **dadurch gekennzeichnet, dass** die Reinigungselemente (9, 16, 23) im Bereich der Ausbringelemente (3) angeordnet sind.

3. Verteilergestänge nach zumindest einem der vorstehenden Ansprüche, **dadurch gekennzeichnet, dass** die Reinigungselemente (9, 16, 23) im unteren Bereich (5) des Verteilergestänges (1) angeordnet sind.

4. Verteilergestänge nach zumindest einem der vorstehenden Ansprüche, wobei das Verteilergestänge (1) rohrförmige und sich in Längserstreckung des Verteilergestänges (1) quer zur Fahrtrichtung erstreckende Elemente (6) aufweist, **dadurch gekennzeichnet, dass** die Zuleitungen für die Reinigungselemente(9, 16, 23) in und/oder an den rohrförmigen Elementen (6) angeordnet sind, dass die rohrförmigen Elemente (6) Austrittsöffnungen (9, 16, 23) aufweisen, dass die Austrittsöffnungen (9, 16, 23) die Reinigungselemente bilden und/oder die Reinigungselemente den Austrittsöffnungen (9, 16, 23) zugeordnet sind.

5. Verteilergestänge nach Anspruch 4, **dadurch gekennzeichnet, dass** den Austrittsöffnungen als Sprühdüsen ausgebildete Reinigungselemente zugeordnet sind.

6. Verteilergestänge nach zumindest einem der vorstehenden Ansprüche, **dadurch gekennzeichnet, dass** aus den Reinigungselementen zumindest ein rotierender und/oder hin- und hergehender Sprühstrahl und/oder Sprühfächer austritt.

7. Verteilergestänge nach zumindest einem der vorstehenden Ansprüche, **dadurch gekennzeichnet, dass** die Reinigungselemente (9, 16, 23) an dem jeweils innersten Teilsegment (2) angeordnet sind.

8. Verteilergestänge nach Anspruch 7, **dadurch gekennzeichnet, dass** die Reinigungselemente (16, 20) in Längsrichtung des innersten Teilsegmentes (2) mittels eines Führungselementes (13, 14, 15) bewegbar angeordnet sind.

9. Verteilergestänge nach zumindest einem der vorstehenden Ansprüche, **dadurch gekennzeichnet, dass** die Reinigungselemente (23) derart angeordnet sind, dass die aus dem Austrittsöffnungen (23) der Reinigungselemente austretende Reinigungsflüssigkeit bei in Transportstellung zusammen geklappten Teilsegmenten (2) des Verteilergestänges (1) zumindest die am stärksten verschmutzten Bereiche (5) des Verteilergestänges (1) von der austretenden Reinigungsflüssigkeiten zum Reinigen des Verteilergestänges (1) erreicht werden.

## Claims

1. Agricultural distribution boom consisting of a plurality of subsegments which can be swung in and out with respect to one another and to which spray-conducting discharge lines having discharge elements are assigned, and with a cleaning device which has at least one cleaning element and is intended for cleaning the distribution boom or parts thereof, **characterized in that** a plurality of cleaning elements (9, 16, 20, 23) are at least partially arranged over the extent of the boom (1), preferably in a distributed manner on at least some of the subsegments (2) of the distribution boom (1), and a cleaning liquid can be supplied to the cleaning elements (9, 16, 20, 23) via feed lines.

2. Distribution boom according to Claim 1, **characterized in that** the cleaning elements (9, 16, 23) are arranged in the region of the discharge elements (3) .

3. Distribution boom according to at least either of the preceding claims, **characterized in that** the cleaning elements (9, 16, 23) are arranged in the lower region (5) of the distribution boom (1).

4. Distribution boom according to at least one of the preceding claims, wherein the distribution boom (1) has tubular elements (6) extending transversely with respect to the direction of travel in the longitudinal extent of the distribution boom (1), **characterized in that** the feed lines for the cleaning elements (9, 16, 23) are arranged in and/or on the tubular elements (6), **in that** the tubular elements (6) have outlet openings (9, 16, 23), **in that** the outlet openings (9, 16, 23) form the cleaning elements, and/or the cleaning elements are assigned to the outlet openings (9, 16, 23).

5. Distribution boom according to Claim 4, **characterized in that** cleaning elements designed as spray nozzles are assigned to the outlet openings.

6. Distribution boom according to at least one of the preceding claims, **characterized in that** at least one rotating and/or reciprocating spray jet and/or spray fan emerges from the cleaning elements.

7. Distribution boom according to at least one of the preceding claims, **characterized in that** the cleaning elements (9, 16, 23) are arranged on the innermost subsegment (2) in each case.

8. Distribution boom according to Claim 7, **characterized in that** the cleaning elements (16, 20) are arranged so as to be moveable in the longitudinal direction of the innermost subsegment (2) by means of a guide element (13, 14, 15).

9. Distribution boom according to at least one of the preceding claims, **characterized in that** the cleaning elements (23) are arranged in such a manner that, the cleaning liquid emerging from the outlet openings (23) of the cleaning elements when subsegments (2) of the distribution boom (1) are folded up in the transport position, reaches at least the most heavily soiled regions (5) of the distribution boom (1) in order to clean the distribution boom (1).

## Revendications

1. Flèche de distribution agricole constituée de plusieurs segments partiels pouvant être rentrés et sortis par pivotement les uns par rapport aux autres, auxquels sont associées des conduites de décharge munies d'éléments de décharge et transportant le fluide pulvérisé, et comprenant un dispositif de nettoyage présentant au moins un élément de nettoyage pour nettoyer la flèche de distribution ou des parties de celle-ci, **caractérisée en ce que** plusieurs éléments de nettoyage (9, 16, 20, 23) sont disposés au moins en partie sur l'étendue de la flèche (1), de préférence de manière répartie sur au moins certains des segments partiels (2) de la flèche de distribution (1), et un liquide de nettoyage peut être acheminé par le biais de conduites d'amenée aux éléments de nettoyage (9, 16, 20, 23).

2. Flèche de distribution selon la revendication 1, **caractérisée en ce que** les éléments de nettoyage (9, 16, 23) sont disposés dans la région des éléments de décharge (3).

3. Flèche de distribution selon au moins l'une quelconque des revendications précédentes, **caractérisée en ce que** les éléments de nettoyage (9, 16, 23) sont disposés dans la région inférieure (5) de la flèche de distribution (1).

4. Flèche de distribution selon au moins l'une quelconque des revendications précédentes, dans laquelle la flèche de distribution (1) présente des éléments tubulaires (6) s'étendant dans la direction longitudinale de la flèche de distribution (1) transversalement à la direction de conduite, **caractérisée en ce que** les conduites d'amenée pour les éléments de nettoyage (9, 16, 23) sont disposées dans et/ou sur les éléments tubulaires (6), **en ce que** les éléments tubulaires (6) présentent des ouvertures de sortie (9, 16, 23), **en ce que** les ouvertures de sortie (9, 16, 23) forment les éléments de nettoyage et/ou les éléments de nettoyage sont associés aux ouvertures de sortie (9, 16, 23).

5. Flèche de distribution selon la revendication 4, **caractérisée en ce que** des éléments de nettoyage réalisés sous forme de buses de pulvérisation sont associés aux ouvertures de sortie.

6. Flèche de distribution selon au moins l'une quelconque des revendications précédentes, **caractérisée en ce qu'**au moins un flux pulvérisé en jet et/ou en éventail, rotatif et/ou animé d'un mouvement de va-et-vient, sort des éléments de nettoyage.

7. Flèche de distribution selon au moins l'une quelconque des revendications précédentes, **caractérisée en ce que** les éléments de nettoyage (9, 16, 23) sont disposés sur le segment partiel le plus interne (2) dans chaque cas.

8. Flèche de distribution selon la revendication 7, **caractérisée en ce que** les éléments de nettoyage (16, 20) sont disposés de manière déplaçable dans la direction longitudinale du segment partiel le plus interne (2) au moyen d'un élément de guidage (13, 14, 15).

9. Flèche de distribution selon au moins l'une quelconque des revendications précédentes, **caractérisée en ce que** les éléments de nettoyage (23) sont disposés de telle sorte que le liquide de nettoyage sortant des ouvertures de sortie (23) des éléments de nettoyage, lorsque les segments partiels (2) de la flèche de distribution (1) sont rabattus les uns vers les autres dans la position de transport, puisse atteindre au moins les régions les plus encrassées (5) de la flèche de distribution (1) en vue du nettoyage de la flèche de distribution (1).
